Europäisches Patentamt

European Patent Office

Office européen des brevets

(11) Numéro de publication : **0 171 488
B1**

# (12) FASCICULE DE BREVET EUROPÉEN

(45) Date de publication du fascicule du brevet :
22.02.89

(21) Numéro de dépôt : **84870170.2**

(22) Date de dépôt : **10.12.84**

(51) Int. Cl.⁴ : **F 04 D 13/04**, F 03 B   3/04

(54) Transformateur d'énergie hydraulique.

(30) Priorité : **12.07.84 LU 85464**

(43) Date de publication de la demande :
**19.02.86 Bulletin 86/08**

(45) Mention de la délivrance du brevet :
**22.02.89 Bulletin 89/08**

(84) Etats contractants désignés :
**AT BE CH DE FR GB IT LI NL SE**

(56) Documents cités :
**CH--A--   91 959
FR--A--   723 536
FR--A-- 2 508 981
GB--A-- 1 525 342
US--A-- 1 675 845**

(73) Titulaire : **ATELIERS DE CONSTRUCTION D'ENSIVAL
Société Anonyme anciennement LEMBREE & BER-
TRAND
44 rue Hodister
B-4851 Pepinster-Wegnez (BE)**

(72) Inventeur : **Leusch, Jacques
Avenue des Grands Champs 68
B-4802 Heusy (BE)**

(74) Mandataire : **Vanderperre, Robert et al
Bureau VANDER HAEGHEN 63 Avenue de la Toison
d'Or
B-1060 Bruxelles (BE)**

## Description

La présente invention concerne un dispositif pour capter l'énergie motrice d'un fluide sous pression relativement basse et la délivrer sous pression plus élevée de manière à la rendre disponible, soit à une certaine dénivellation par rapport à son lieu de production, soit à une certaine distance de ce lieu de production, pour des utilisations diverses. Une application typique de ce dispositif est l'adduction d'eau d'un cours d'eau pour la rendre disponible à un certain niveau ou à une certaine distance pour la consommation, l'irrigation ou d'autres besoins.

Les moyens connus pouvant servir à l'adduction d'eau consistent en une association d'une pompe et d'un engin d'entraînement (moteur ou turbine). Ces installations sont relativement encombrantes et nécessitent un coût d'installation relativement élevé, voire même une consommation d'énergie motrice.

L'invention a pour objet un dispositif compact qui se distingue par un montage et un démontage aisé et dont le coût d'installation est modéré.

Cet objectif est atteint avec un dispositif transformateur d'énergie hydraulique comprenant un corps présentant intérieurement un canal principal courbe ayant une entrée et une sortie dont les axes sont perpendiculaires l'un à l'autre, et un canal secondaire s'étendant coaxialement à l'axe de la sortie du canal principal, le corps présentant une branche de refoulement s'étendant dans un plan perpendiculaire à l'axe du canal secondaire, et un rotor logé dans le corps, ce rotor comprenant un arbre qui s'étend suivant l'axe du canal secondaire et de la sortie du canal principal, cet arbre étant monté dans des paliers afin de pouvoir tourner autour de son axe longitudinal, une turbine fixée à une extrémité de l'arbre de manière à être entraînée par le fluide circulant dans le canal principal et une roue centrifuge fixée à l'autre extrémité de l'arbre de manière à être entraînée par l'arbre et à recevoir le fluide prélevé dans le canal principal par le canal secondaire et à délivrer ce fluide sous une pression plus élevée à la sortie de la branche de refoulement.

Suivant l'invention, le corps du dispositif comprend un corps de pompe centrifuge formé avec la branche de refoulement et présentant une partie saillante terminée par une extrémité en forme d'entonnoir à surface courbe ; un corps de turbine formé avec le canal principal courbe et s'adaptant sur le corps de pompe centrifuge de manière à emboîter ladite partie saillante en sorte que la surface courbe de l'entonnoir se raccorde à la surface du canal principal courbe, l'entonnoir formant l'embouchure du canal secondaire qui s'étend à l'intérieur de la partie saillante pour amener le fluide à la pompe centrifuge ; et un rotor constitué d'un arbre portant une roue de turbine et une roue centrifuge, l'arbre étant monté à rotation dans des paliers fixés l'un dans le corps de turbine et l'autre dans le corps de pompe centrifuge de manière que cet arbre s'étende pratiquement suivant l'axe dudit canal secondaire.

Les avantages du dispositif selon l'invention peuvent être résumés comme suit :

conditions d'installation réduites au minimum,

démontage aisé, sans enlèvement du corps de turbine,

remplacement aisé et rapide de pièces usées, fonctionnement stable sans régulation,

exploitation simple : mise en marche et arrêt par simple ouverture d'une vanne,

arrêt du dispositif sans intervention par manque de fluide d'alimentation,

protection limitée à une crépine d'alimentation.

L'invention est exposée plus en détails dans ce qui suit avec référence aux dessins ci-annexés dans lesquels :

la figure 1 est une vue en coupe axiale d'un mode d'exécution du dispositif selon l'invention,

la figure 2 est une vue suivant la ligne II-II de la figure 1,

la figure 3 est une vue suivant la ligne III-III de la figure 1.

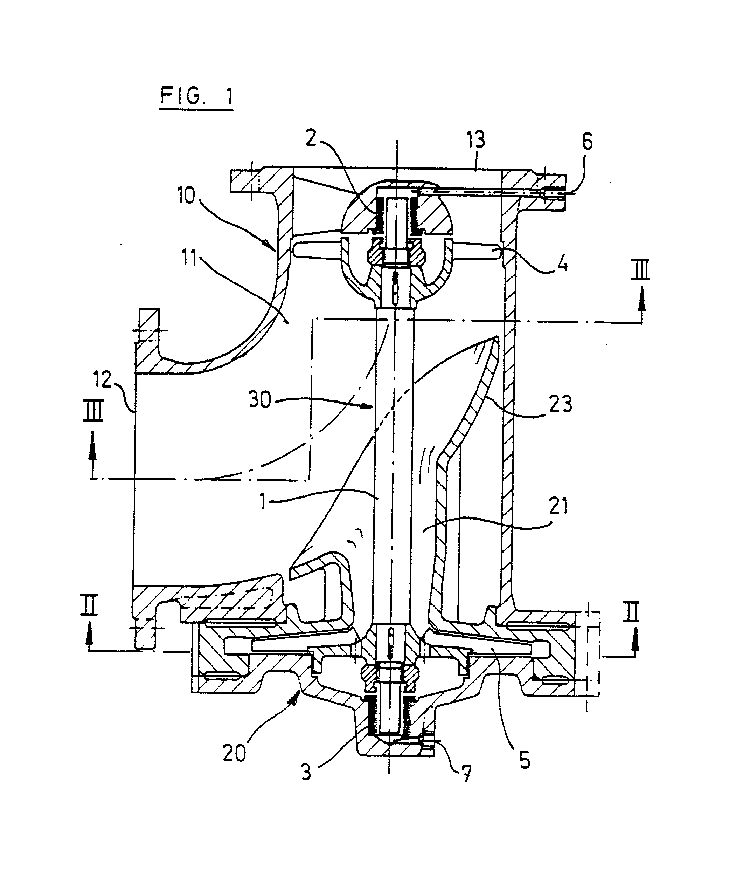

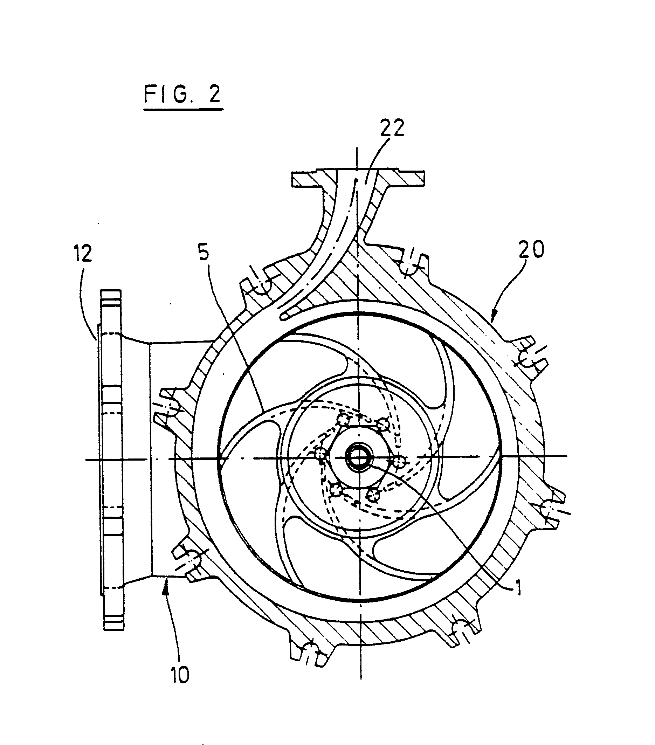

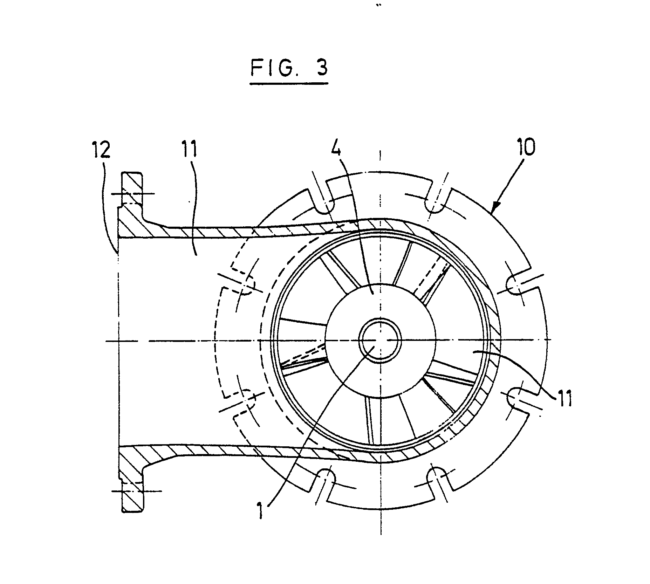

Comme le montrent les dessins, le corps du dispositif présente intérieurement un canal principal courbe 11 (figure 1) ayant une entrée 12 et une sortie 13 dont les axes sont perpendiculaires l'un à l'autre, et un canal secondaire 21 qui s'étend coaxialement à l'axe de la sortie 13 du canal 11. Le corps du dispositif présente encore une branche courbe 22 (visible sur la figure 2) qui s'étend dans un plan perpendiculaire à l'axe du canal secondaire 21. Dans le corps du dispositif est logé un rotor 30 qui comprend un arbre 1 sur lequel sont fixées une roue de turbine 4 et une roue centrifuge 5. L'arbre 1 s'étend suivant l'axe commun du canal secondaire 21 et de la sortie 13 du canal principal. Il est monté dans des paliers 2 et 3 afin de pouvoir tourner autour de son axe longitudinal. La roue centrifuge 5 (figure 2) s'étend dans un plan qui contient l'axe longitudinal de la branche courbe 22 qui sert à évacuer le fluide refoulé par la roue 5. La roue de turbine 4 (figure 3) s'étend dans une section transversale du canal principal 11.

Lorsque du fluide, l'eau d'un cours d'eau par exemple, est introduit par l'entrée 12 et circule dans le canal principal 11, il entraîne la turbine 4 et celle-ci entraîne alors l'arbre 1 en rotation autour de son axe longitudinal ainsi que la roue centrifuge 5 calée sur l'arbre. Une partie du fluide introduit dans le canal principal 11 est aspirée dans le canal secondaire 21 par la roue centrifuge 5 et refoulé sous pression plus élevée par la branche 22. Le fluide sortant a une énergie motrice plus élevée qui lui permet d'être distribué pour utilisation à un niveau plus élevé ou pour utilisation à une certaine distance. L'orientation du dispositif est prévue pour alimentation en charge par gravité par la bride d'entrée 12. La bride de sortie 13 est orientée latéralement ou vers le bas. La branche de refoulement 22 est orientable suivant la disposition de l'installation.

Du point de vue mode de construction, le dispositif est avantageusement constitué de deux parties emboîtables formant un ensemble compact : un corps de turbine 10 formé avec le canal principal courbe 11 et un corps de pompe centrifuge 20 formé avec le canal secondaire 21 et la branche de refoulement courbe 22. La partie formant le canal secondaire 21 est terminée par un pavillon formant entonnoir 23 dont la surface se raccorde à la surface du canal principal. Le rotor 30 constitué de l'arbre 1 portant les roues 4 et 5 est fixé dans les paliers 2 et 3 montés dans le corps de turbine 10 et le corps de pompe centrifuge 20. L'ensemble est fixé par boulonnage des deux corps entre eux. Les paliers 2 et 3 sont par exemple en matière synthétique lubrifiée directement par le fluide si celui-ci n'est pas chargé. Dans le cas contraire, si l'on craint une usure des paliers, on peut prévoir un graisseur alimentant les paliers par les tubulures 6 et 7 par exemple.

L'installation du dispositif selon l'invention est simple. La bride d'entrée 12 se fixe directement sur la bride externe d'un tuyau d'alimentation muni simplement d'une vanne d'arrêt et d'une crépine. La bride de sortie 13 se fixe sur la bride d'une conduite allant vers le lieu de décharge sans pression. Un tuyau de refoulement se raccorde à la branche de refoulement 22 pour amener le fluide sous pression à son lieu de destination.

L'ensemble compact, qui est avantageusement réalisé en métal léger, est de poids réduit, ce qui rend les manipulations et l'installation aisées.

Le dispositif selon l'invention peut être utilisé commodément pour des débits moteurs de 300 à 3 000 m$^3$ par heure environ avec une pression de 1 à 6 mètres de colonne d'eau environ. Il permet de produire des débits refoulés de 3 à 100 m$^3$/heure environ avec une hauteur de refoulement de 5 à 30 mètres de colonne d'eau environ.

## Revendication

Transformateur d'énergie hydraulique comprenant un corps présentant intérieurement un canal principal courbe ayant une entrée et une sortie dont les axes sont perpendiculaires l'un à l'autre, et un canal secondaire s'étendant coaxialement à l'axe de la sortie du canal principal, le corps présentant une branche de refoulement qui s'étend dans un plan perpendiculaire à l'axe du canal secondaire, et un rotor logé dans le corps, ce rotor comprenant un arbre s'étendant suivant l'axe du canal secondaire et de la sortie du canal principal, cet arbre étant monté dans des paliers afin de pouvoir tourner autour de son axe longitudinal, une turbine fixée à une extrémité de l'arbre de manière à être entraînée par un fluide circulant dans le canal principal, et une roue centrifuge fixée à l'autre extrémité de l'arbre de manière à être entraînée par l'arbre et à recevoir le fluide aspiré dans le canal secondaire et à délivrer ce fluide à pression plus élevée à la sortie de la branche de refoulement, caractérisé en ce que le corps comprend un corps de pompe centrifuge (20) formé avec la branche de refoulement (22) et présentant une partie saillante terminée par une extrémité en forme d'entonnoir à surface courbe (23) ; un corps de turbine (10) formé avec le canal principal courbe (11) et s'adaptant sur le corps de pompe centrifuge (20) de manière à emboîter ladite partie saillante en sorte que la surface courbe de l'entonnoir se raccorde à la surface du canal principal courbe, l'entonnoir formant l'embouchure du canal secondaire qui s'étend à l'intérieur de la partie saillante pour amener le fluide à la pompe centrifuge ; et un rotor (30) constitué d'un arbre portant une roue de turbine (4) et une roue centrifuge (5), l'arbre (1) étant monté à rotation dans des paliers (2, 3) fixés l'un dans le corps de turbine (10) et l'autre dans le corps de pompe centrifuge (20) de manière que cet arbre s'étende pratiquement suivant l'axe dudit canal secondaire (21).

## Claim

A hydraulic energy converter comprising a body having internally a curved main duct with an inlet and an outlet whose axes are perpendicular to one another and a secondary duct extending coaxially of the axis of the main duct outlet, the body having a delivery branch which extends in a plane perpendicular to the secondary-duct axis and a rotor device in the body, the rotor device having a shaft which extends coaxially of the secondary duct and of the main duct outlet and is disposed in bearings for rotation around its longitudinal axis, a turbine being so secured to one end of the shaft as to be driven by a fluid flowing through the main duct, a centrifugal rotor being so secured to the other end of the shaft as to be driven thereby and as to receive the fluid aspirated into the secondary duct and to deliver such fluid at a higher pressure at the outlet of the delivery branch, characterised in that the body comprises : a centrifugal pump body (20) formed with the delivery branch (22) and having a projecting part terminating in a funnelshaped end having a curved surface (23) ; a turbine body (10) formed with the curved main duct (11) and so fitting on the centrifugal pump body (20) so as to engage over the projecting part so that the curved surface of the funnel merges into the surface of the curved main duct, the funnel forming the inlet of the secondary duct which extends inside the projecting part to bring the fluid to the centrifugal pump ; and a rotor device (30 embodied by a shaft carrying a turbine rotor (4) and a centrifugal rotor (5), the shaft (1) being rotatably mounted in bearings (2, 3), one of which is secured in the turbine body (10) while the other is secured in the centrifugal pump body (20) so that the last-mentioned shaft extends substantially axially of the secondary duct (21).

## Patentanspruch

Umwandler für hydraulische Energie, mit einem Gehäuse, das in seinem Inneren einen gewölbten Hauptkanal aufweist, der einen Einlass und einen Auslass hat, deren Achsen senkrecht zueinander verlaufen, sowie einen Nebenkanal, der sich koaxial zur Achse des Auslasses des Hauptkanals erstreckt, wobei das Gehäuse eine Stau-Abzweigung aufweist, die sich in einer Ebene senkrecht zur Achse des Nebenkanals erstreckt, und ein Rotor im Gehäuse angebracht ist, der eine Welle enthält, die sich zur Achse des Nebenkanals und zum Auslass des Hauptkanals erstreckt, und die Welle in Lagern gehalten wird, damit sie sich um ihre Längsachse drehen kann, eine Turbine an einem Ende der Welle derart befestigt ist, dass sie durch ein im Hauptkanal zirkulierendes Fluid angetrieben wird, und ein Kreiselpumpenrad am anderen Ende der Welle derart befestigt ist, um durch die Welle angetrieben zu werden und das im Nebenkanal angesaugte Fluid aufzunehmen und dieses Fluid mit einem höheren Druck am Ausgang der Stau-Abzweigung abzugeben, dadurch gekennzeichnet, dass das Gehäuse ein Kreiselpumpengehäuse (20) umfasst, das zusammen mit der Stau-Abzweigung (22) ausgebildet ist und einen vorspringenden Abschnitt aufweist, der durch ein Ende in Form eines Trichters mit gewölbter Oberfläche (23) gebildet wird, dass ein Turbinengehäuse (10) zusammen mit dem gewölbten Hauptkanal (11) gebildet wird und sich an das Kreiselpumpengehäuse (20) derart anpasst, dass es den vorspringenden Abschnitt in einer Weise umgibt, dass die gewölbte Oberfläche des Trichters sich an die Oberfläche des gewölbten Hauptkanals anschliesst, der Trichter die Mündung des Nebenkanals bildet, der sich in das Innere des vorspringenden Abschnittes erstreckt, um das Fluid der Kreiselpumpe zuzuführen, dass ein Rotor (30) aus einer ein Turbinenrad (4) und ein Kreiselpumpenrad (5) tragenden Welle besteht, und die Welle (1) zur Drehung in Lagern (2, 3) gehalten wird, von denen eines im Turbinengehäuse (10) und das andere im Kreiselpumpengehäuse (20) derart befestigt ist, dass sich die Welle praktisch entsprechend der Achse des Nebenka-nals (21) erstreckt.

FIG. 1

## FIG. 2

FIG. 3